Europäisches Patentamt

European Patent Office

Office européen des brevets

(19)

(11) Publication number: **0 021 596**
**B1**

(12) **EUROPEAN PATENT SPECIFICATION**

(45) Date of publication of patent specification: **27.07.83**

(21) Application number: **80301678.1**

(22) Date of filing: **21.05.80**

(51) Int. Cl.³: **C 07 C 102/00,**
**C 07 C 103/38,**
**C 08 K 5/20, C 08 L 23/00**

(54) N,N'-bis-2(3(3,5-t-butyl-4-hydroxyphenyl)propionyloxy)ethyl oxamide, a method of making it and compositions incorporating it.

(30) Priority: **30.05.79 US 43790**

(43) Date of publication of application:
**07.01.81 Bulletin 81/1**

(45) Publication of the grant of the patent:
**27.07.83 Bulletin 83/30**

(84) Designated Contracting States:
**BE DE FR GB IT NL**

(56) References cited:
**EP - A - 0 009 866**
**US - A - 4 145 556**

(73) Proprietor: **UNIROYAL, INC.**
**1230 Avenue of the Americas Rockefeller Center**
**New York, New York 10020 (US)**

(72) Inventor: **Jancis, Elmar Harry**
**89 Spruce Drive**
**Naugatuck, New Haven Connecticut 06770 (US)**

(74) Representative: **Geldard, David Guthrie et al,**
**URQUHART-DYKES AND LORD 11th Floor, Tower**
**House Merrion Way**
**Leeds, LS2 8PB West Yorkshire (GB)**

**The file contains technical information submitted after the application was filed and not included in this specification**

Courier Press, Leamington Spa, England.

N,N'-bis-2(3(3,5-t-butyl-4-hydroxyphenyl)propionyloxy)ethyl oxamide, a method of making it and compositions incorporating it

The present invention relates to N,N'-bis-2[3(3,5-t-butyl-4-hydroxyphenyl)propionyloxy]ethyl oxamide melting at about 178°C.

U.S. Patent 4,145,556 (Hirsch et al.) discloses a N,N$^1$-bis-2[3(3,5-t-butyl-4-hydroxyphenyl)-propionyloxy]ethyl oxamide having a melting point of 134—136°C. The same compound is disclosed in U.S. Patent Application S.N. 931,087 filed August 4, 1978.

All organic polymeric materials are to a smaller or larger degree affected by heat and oxygen. Antioxidants are incorporated into polymers to protect them against heat and oxygen both during processing and during their service lifetime. Besides the obvious criterion of activity, such antioxidants have to meet a number of other requirements, depending on the intended end use of the polymer. Such criteria include color, odor, hydrolytic stability, resistance to leaching and permanence or lack of volatility. (See Kirk-Othmer Encyclopedia of Chemical Technology. *Vol. 3* p. 133, John Wiley and Sons, 1978). Since higher processing temperatures are desirable in order to increase processing productivity, antioxidant volatility or lack thereof becomes a very important factor because such processing temperatures may cause volatilization, sublimation or decomposition of the antioxidant, reducing or even eliminating antioxidants stabilization.

It is is the object of this invention to provide an antioxidant with improved temperature permanence. The antioxidant is N,N'-bis-2-[3(3,5-di-tert.-butyl-4-hydroxyphenyl)propionyloxy]ethyl oxamide melting at about 178°C.

It was found, unexpectedly, that the high melting form has much improved permanence/volatility characteristics. In a thermogravimetric experiment described in Example 2, the higher melting form lost 18% of its weight while the lower melting species lost 63% of its weight.

The high melting form can be made readily by recrystallizing the crude or pure low melting form from a suitable solvent such as ethanol, isopropanol or acetone, preferably by seeding the solution with crystals of the higher melting species. Such seed crystals are readily prepared by column chromatography or by slow crystallization.

The compound of the present invention is useful in stabilizing organic materials normally subject to oxidative degradation. Materials that are thus stabilized include a multitude of synthetic polymers. Among those polymers are various polyolefins such as polyethylene, polypropylene, polybutylene, polybutadiene and polymethylpentane. Other polymers stabilized by the compounds of the present invention include acetal resins, polyacrylates, polydialkylpthalate, cellulosics, polyamides, polyesters, polyurethanes, polycarbonate, polystyrene, polyvinyl chloride and polyvinylidene chloride. Copolymers, can also be stabilized by the compound of the present invention. Representative copolymers include ethylene/propylene copolymers, butadiene/styrene copolymers, ethylene/vinyl acetate copolymers, and ethylene/ethyl acrylate copolymers. Copolymers also include terpolymers such as ethylene/propylene/non-conjugated diene terpolymers and acrylonitrile/butadiene/styrene interpolymers. Polymer blends such as polystyrene/polyphenylene oxide and ethylene propylene copolymer or terpolymer with polypropylene can also be stabilized by the compound of the present invention. Other materials stabilized by the compound of the present invention include hot melt adhesives such as those based on polyesters, polyamides or ethylene/vinyl acetate. Also stabilized are petroleum products such as fuels, lubricating oils, petrolatum jellies, and natural products such as natural rubber, waxes, fat, tallow, linseed oil, corn oil, cottonseed oil and cod-liver oil. The preceding list is representative, though by no means exhaustive, of the products that can benefit from the compound of the present invention. To achieve protection against oxidative degradation, the compound of the present invention is added in the amounts generally used for known antioxidants which may have similar properties to achieve such protection. Depending on the substrate used, the antioxidant is added in amounts of 0.001 to 10 percent by weight based on the weight of the substrate, with the usual range being from 0.05 to 2.0 percent.

The compound of the present invention can be used by itself to stabilize organic materials, or it can be used in combination with other stabilizers. Such other stabilizers might include other phenolics, thio compounds of various kinds, such as thiodipropionate esters, phosphites and phosphonates, ultraviolet stabilizers of various kinds as well as other additives where the use of such additives has been found beneficial.

The following non-limiting examples further illustrate the use of the invention.

Example 1
Preparation of high melting N,N'-bis-2-[3(3,5-di-tert.-butyl-4-hydroxyphenyl)propionyloxy]ethyl oxamide

A 25 g. sample of N,N$^1$-bis-2-[3(3,5-di-tert.-butyl-4-hydroxyphenyl)propionyloxy]ethyl oxamide (melting at 128—131°C) was dissolved in 200 ml of a 50% ethyl acetate/50% hexane mixture and passed through a 6 inch×2 inch column packed with Davison Chemical grade 62 silica gel. On evaporation of the eluent, the residue was crystallized from ethanol. It gave a material melting at 177—178°C. All but 6 g. of the sample was recovered.

2

**0 021 596**

Example 2

Comparison of volatility of low and high melting N,N'-bis-2-[3(3,5-di-tert.-butyl-4-hydroxyphenyl)-propionyloxy]ethyl oxamide

Thermograms on 10.6 mg samples of the pure (melting at 177—178°C) high melting product and the pure (melting at 136—138°C) low melting product was run in air at a heating rate of 10°C/minute. The low melter had lost 62% of its initial weight by the time a temperature of 300°C was reached, but the high melting species of this invention had lost only 18% in the same period.

Example 3

This example shows the usefulness of the compound of the present invention as a stabilizer in polypropylene.

The compound, was incorporated into Profax 6501 (trademark of Hercules Inc. for polypropylene) at a concentration of 0.1% by weight, based on the weight of the polypropylene, on a Banbury mill at 165°C. Seventy five mil (1.9mm) thick plaques were prepared by compression molding in a press at 27,000 psig (186 MPa) and 177°C. One inch diameter buttons were punched from the plaques and the specimens were placed in a forced air over at 149°C and the number of days to embrittlement was noted. When two out of three buttons embrittled, the specimen was considered to have failed. The compound of the present invention protected polypropylene for 51 days. Unprotected polypropylene embrittles in one day.

**Claims**

1. N,N¹-Bis-(2-(3-(3,5-di-tert.-butyl-4-hydroxyphenyl)propionyloxy)ethyl)oxamide characterised in that it has a melting point of about 178°C.

2. A method of making N,N¹-bis-(2-(3-(3,5-di-tert.-butyl-4-hydroxyphenyl)propionyloxy)ethyl)-oxamide characterised by recrystallising the crude or pure low melting point from a solvent.

3. A method as claimed in claim 2 in which the solvent is ethanol, isopropanol or acetone.

4. A method as claimed in either or claims 2 or 3 in which the recrystallisation is initiated by seeding the solution with crystals of the higher melting species.

5. A method as claimed in claim 4 in which the seed crystals are prepared by column chromatography or by slow crystallisation.

6. A polymeric composition comprising a polymeric compound and N,N¹-bis-(2-(3-(3,5-di-tert.-butyl-4-hydroxyphenyl)propionyloxy)ethyl)oxamide having a melting point of about 178°C.

7. A composition according to claim 6 in which the N,N¹-bis-(2-(3-(3,5-di-tert.-butyl-4-hydroxyphenyl)propionyloxy)ethyl)oxamide is present in an amount of 0.001 to 10% by weight based on the weight of the polymeric compound.

8. A composition as claimed in claim 7 in which the N,N¹-bis-(2-(3-(3,5-di-tert.-butyl-4-hydroxyphenyl)propionyloxy)ethyl)oxamide is present in the range of from .05 to 2% by weight.

9. A composition as claimed in any of claims 6 to 8 in which the polymeric compound is a polyolefin.

10. A composition as claimed in claim 9 in which the polyolefin is polyethylene or polypropylene.

11. A composition according to any of claims 6 to 10 in which N,N¹-bis-(2-(3-(3,5-di-tert.-butyl-4-hydroxyphenyl)propionyloxy)ethyl)oxamide is used in combination with another stabiliser selected from phenolic stabilisers, thio-compounds, phosphites, phosphonates, and ultraviolet stabilisers.

**Patentansprüche**

1. N,N¹-Bis{2-[3-(3,5-di-t-butyl-4-hydroxyphenyl)-propionyloxy]-ethyl}-oxamid, dadurch gekennzeichnet, daß es einen Schmelzpunkt von etwa 178°C hat.

2. Verfahren zur Herstellung von N,N¹-Bis{2-[3-(3,5-di-t-butyl-4-hydroxyphenyl)-propionyloxy]-ethyl}-oxamid, dadurch gekennzeichnet, daß die rohe oder reine Form mit niedrigem Schmelzpunkt aus einem Lösungsmittel umkristalliert wird.

3. Verfahren nach Anspruch 2, bei dem das Lösungsmittel Ethanol, Isopropanol oder Aceton ist.

4. Verfahren nach Anspruch 2 oder 3, bei dem das Umkristallisieren durch Impfen der Lösung mit Kristallen der Höherschmelzenden Spezies eingeleitet wird.

5. Verfahren nach Anspruch 4, bei dem die Impfkristalle durch Säulenchromatographie oder durch langsames Kristallisieren hergestellt werden.

6. Polymere Masse, enthaltend eine polymere Verbindung und N,N¹-Bis{2-[3-(3,5-di-t-butyl-4-hydroxyphenyl)-propionyloxy]-ethyl}-oxamid mit einem Schmelzpunkt von etwa 178°C.

7. Masse nach Anspruch 6, in der das N,N¹-Bis{2-[3-(3,5-di-t-butyl-4-hydroxyphenyl)-propionyloxy]-ethyl}-oxamid in einer Menge von 0,001 bis 10 Gew.-%, auf das Gewicht der polymeren Verbindung bezogen, vorliegt.

8. Masse nach Anspruch 7, in der das N,N¹-Bis-{2-[3-(3,5-di-t-butyl-4-hydroxyphenyl)-propionyloxy]-ethyl}-oxamid in einer Menge von 0,05 bis 2 Gew.-% vorliegt.

9. Masse nach einem der Ansprüche 6 bis 8, in der die polymere Verbindung ein Polyolefin ist.

3

10. Masse nach Anspruch 9, in der das Polyolefin Polyethylen oder Polypropylen ist.

11. Masse nach einem der Ansprüche 6 bis 10, in der das N,N¹-Bis{2-[3-(3,5-di-t-butyl-4-hydroxyphenyl)-propionyloxy]-ethyl}-oxamid in Verbindung mit einem anderen, aus phenolischen Stabilisatoren, Thioverbindungen, Phosphiten, Phosphonaten und UV-Stabilisatoren ausgewählten Stabilisator verwendet wird.

**Revendications**

1. N,N¹-bis-(2-(3-(3,5-di-tert-butyl-4-hydroxyphényl)propinyloxy)éthyl)oxamide, caractérisé en ce qu'il a un point de fusion de l'ordre de 178°C.

2. Procédé de production de N,N¹-bis-(2-(3-(3,5-di-tert-butyl-4-hydroxyphényl)propionyloxy)-éthyl)oxamide, caractérisé par la recristallisation de la forme brute ou pure à faible point de fusion dans un solvant.

3. Procédé selon la revendication 2, où le solvant est de l'éthanol, de l'isopropanol ou de l'acétone.

4. Procédé selon l'une quelconque des revendications 2 ou 3, où la recristallisation est amorcée en ensemençant la solution de cristaux de l'espèce de plus fort point de fusion.

5. Procéde selon la revendication 4, où les cristaux sont préparés par chromatographie en colonne ou par cristallisation lente.

6. Composition polymérique comprenant un composé polymérique et du N,N¹-bis-(2-(3-(3,5-di-tert-butyl-4-hydroxyphényl)propionyloxy)éthyl)oxamide ayant un point de fusion d'environ 178°C.

7. Composition selon la revendication 6, où le N,N¹-bis-(2-(3-(3,5-di-tert-butyl-4-hydroxy-phényl)propionyloxy)éthyl)oxamide est présent en une quantité de 0.001 à 10% en poids en se basant sur le poids du composé polymérique.

8. Composition selon la revendication 7, où le N,N¹-bis-(2-(3-(3,5-di-tert-butyl-4-hydroxy-phényl)propionyloxy)éthyl)oxamide est présent entre 0,05 et 2% en poids.

9. Composition selon l'une quelconque des revendications 6 à 8, où le composé polymérique est une polyoléfine.

10. Composition selon la revendication 9, où la polyoléfine est du polyéthylène ou du polypropylène.

11. Composition selon l'une quelconque des revendications 6 à 10, où on utilise du N,N¹-bis-(2-(3-(3,5-di-tert-butyl-4-hydroxyphényl)propionyloxy)éthyl)oxamide en combinaison avec un autre agent stabilisant choisi parmi des agents stabilisants phénoliques, des composés thio, des phosphites, des phosphonates et des agents stabilisants aux ultraviolets.